# EUROPÄISCHE PATENTSCHRIFT

(11) **EP 0 626 304 B1**
(45) Veröffentlichungstag und Bekanntmachung des Hinweises auf die Patenterteilung: **25.02.1998**
(21) Anmeldenummer: 94106282.0
(22) Anmeldetag: 22.04.1994
(51) Int. Cl.: B62D 5/08

(54) **Ventilanordnung**
Valve arrangement
Aménagement de soupape

(30) Priorität: 28.05.1993 DE 4317786
(43) Veröffentlichungstag der Anmeldung: 30.11.1994
(73) Patentinhaber: LUK FAHRZEUG-HYDRAULIK GmbH & Co. KG, D-61289 Bad Homburg (DE)
(72) Erfinder: Körtge, Randolf, D-61250 Usingen (DE)
(74) Vertreter: Gleiss, Alf-Olav, Dr.jur. Dipl.-Ing.

(56) Entgegenhaltungen:
- DE-A- 1 675 469
- GB-A- 1 077 319
- US-A- 2 887 062
- US-A- 3 210 939
- US-A- 3 752 174
- US-A- 4 311 161
- US-A- 4 917 139

## Beschreibung

Die Erfindung betrifft eine Ventilanordnung mit einem Stromregelventil, das einen in einer Ventilbohrung gegen die Kraft einer Feder axial verschiebbar und dichtend geführten Ventilkolben aufweist, mit einer Öffnung zur Druckseite hin, mit einer die verbraucherseitige Druckseite des Stromregelventils mit einer Druckbegrenzungsseite des Stromregelventils verbindenden Steuerleitung und einem in der Druckbegrenzungsseite angeordneten Druckbegrenzungsventil, wobei der Ventilkolben bei hohem pumpenseitigen Druck eine Verbindung zur Ansaugseite der Pumpe freigibt.

Aus Der US-Patentschrift 4,917,139 ist eine derartige Ventilanordnung bekannt. Sie wird in Lenkhilfpumpen für Kraftfahrzeuge eingesetzt und sorgt dafür, daß ein in einer Arbeitsleitung zu einem Verbraucher sich einstellender Druck begrenzt werden kann. Diese Begrenzung erfolgt dadurch, daß die verbraucherseitige Druckseite des eine Druckwaage bildenden Stromregelventils über eine Steuerleitung mit der Druckbegrenzungsseite des Stromregelventils verbunden wird. Diese Steuerleitung ist dabei so ausgebildet, daß sie einen Druckausgleich zwischen der Druckseite und der Druckbegrenzungsseite des Stromregelventils bewirkt. Nachdem ein bestimmter Druck überschritten wird, wird der Ventilkolben unter dem Druck des Öls gegen die Kraft einer Feder in der Ventilbohrung axial verschoben. Es ist bekannt, die die verbraucherseitige Druckseite und die Druckbegrenzungsseite verbindende Steuerleitung durch mehrere in dem Ventilgehäuse angeordnete Bohrungen herzustellen. Ferner ist dieser Ventilanordnung eine zweite Steuerleitung zugeordnet, die die Druckseite der Pumpe mit einem weiteren Druckbegrenzungsventil verbindet. Diese Steuerleitung ist innerhalb des Ventilkolbens geführt.

Aus der Druckschrift GB 1,077,319 ist eine Ventilanordnung bekannt, die mit einem gegen eine Feder verschiebbaren Ventilkolben die Durchflußmenge eines Hydraulikmediums von einer Pumpe zu einem Verbraucher reguliert. Dazu weist diese Ventilanordnung am Ventilkolben eine Verlängerung auf, die mit einer Öffnung, die einer Arbeitsleitung zugeordnet ist, so zusammenwirkt, daß bei einer Axialbewegung des Ventilkolbens die Öffnung geöffnet oder verschlossen werden kann. Dadurch ist eine Beeinflussung der Durchflußmenge des Hydraulikmediums zum Verbraucher möglich. Ferner ist der Ventilanordnung ein Druckbegrenzungsventil zugeordnet, das über eine Steuerleitung mit der verbraucherseitigen Druckseite verbunden ist. Diese Steuerleitung ist im Ventilgehäuse untergebracht beziehungsweise darin durch Bohrungen realisiert.

Hierbei ist nachteilig, daß diese Bohrungen mit Präzisionswerkzeugen eingebracht werden müssen und daher nur unter großem Aufwand herstellbar sind. Damit die verbraucherseitige Druckseite mit der Druckbegrenzungsseite verbunden werden kann, ist die Anordnung von mehreren zueinander versetzt angeordneten Bohrungen notwendig, die dann gemeinsam die Steuerleitung ergeben. Da sie von der Oberfläche her eingebracht werden, besteht ferner der Nachteil, daß ihre Mündungen an der Oberfläche abgedichtet werden müssen, da nicht alle Bereiche der einzubringenden Bohrungen für die Steuerleitung benötigt werden.

Im allgemeinen Stand der Technik ist bereits vorgeschlagen worden, die Steuerleitung während eines Gußvorgangs in das Ventilgehäuse zu integrieren. Hierbei ist jedoch nachteilig, daß die Steuerleitung nur sehr aufwendig und oftmals nicht mit hinreichender Genauigkeit eingebracht werden kann.

Der Erfindung liegt daher die Aufgabe zugrunde, eine Ventilanordnung der gattungsgemäßen Art zu schaffen, bei der in einfacher Weise eine Steuerleitung vorgesehen werden kann.

Diese Aufgabe wird mit Hilfe der in Anspruch 1 genannten Merkmale gelöst. Dadurch, daß die Steuerleitung durch den Ventilkolben geführt ist, und daß der Ventilkolben eine in die Druckseite reichende, vorzugsweise zylindrische, Verlängerung aufweist, innerhalb derer eine die Steuerleitung bildende axiale Bohrung angeordnet ist, die mit wenigstens einem in die Druckbegrenzungsseite des Ventilkolbens mündenden Kanal in Verbindung steht, wird sehr vorteilhaft erreicht, daß die Steuerleitung zwischen der verbraucherseitigen Druckseite und der Druckbegrenzungsseite des Stromregelventils durch Einbringen einer einfachen Bohrung in den Ventilkolben realisiert werden kann. Da der Ventilkolben in aller Regel als rotationssymmetrisches Teil ausgebildet ist, das zur Herstellung der notwendigen Dichtflächen beziehungsweise Anlageflächen für die Druckfeder ohnehin bearbeitet werden muß, kann in einfacher Weise bei dieser Bearbeitung gleichzeitig die notwendige Bohrung für die Steuerleitung mit hergestellt werden.

In weiterer bevorzugter Ausgestaltung der Erfindung ist vorgesehen, daß die axiale Bohrung über eine durchmesserkleinere Meßblende an der Druckseite des Stromregelventils mündet. Durch diese integrierte, als Druckabfalldrossel für das Druckbegrenzungsventil dienende Meßblende wird eine zusätzliche Bohrung einer sonst außenliegenden Drossel vermieden.

In weiterer bevorzugter Ausgestaltung der Erfindung ist vorgesehen, daß die die Bohrung mit der Druckbegrenzungsseite verbindenden Kanäle durch die Innenwandung des Ventilkolbens geführt werden und eine druckbegrenzungsseitig in den Ventilkolben eingebrachte Aufnahmeöffnung für das Druckbegrenzungsventil das Gehäuse des Druckbegrenzungsventils bildet. Hiermit wird sehr vorteilhaft erreicht, daß durch einfaches Einbringen eines zylindrischen Innenraums in den Ventilkolben und das Einbringen eines entsprechend geringer dimensionierten Druckbegrenzungsventils die notwendigen Steuerkanäle geschaffen werden können, ohne daß zusätzliche Bearbeitungen notwendig sind.

Weitere vorteilhafte Ausgestaltungen der Erfindung ergeben sich aus den übrigen in den Unteransprüchen angegebenen Merkmalen.

Die Erfindung wird nachfolgend in Ausführungsbeispielen anhand der zugehörigen Zeichnungen näher erläutert. Es zeigen:
- Figur 1: einen Längsschnitt durch eine Ventilanordnung mit einem Stromregelventil mit integriertem Druckbegrenzungsventil und
- Figur 2: einen Längsschnitt durch eine Ventilanordnung mit einem Stromregelventil mit einem separat angeordneten Druckbegrenzungsventil.

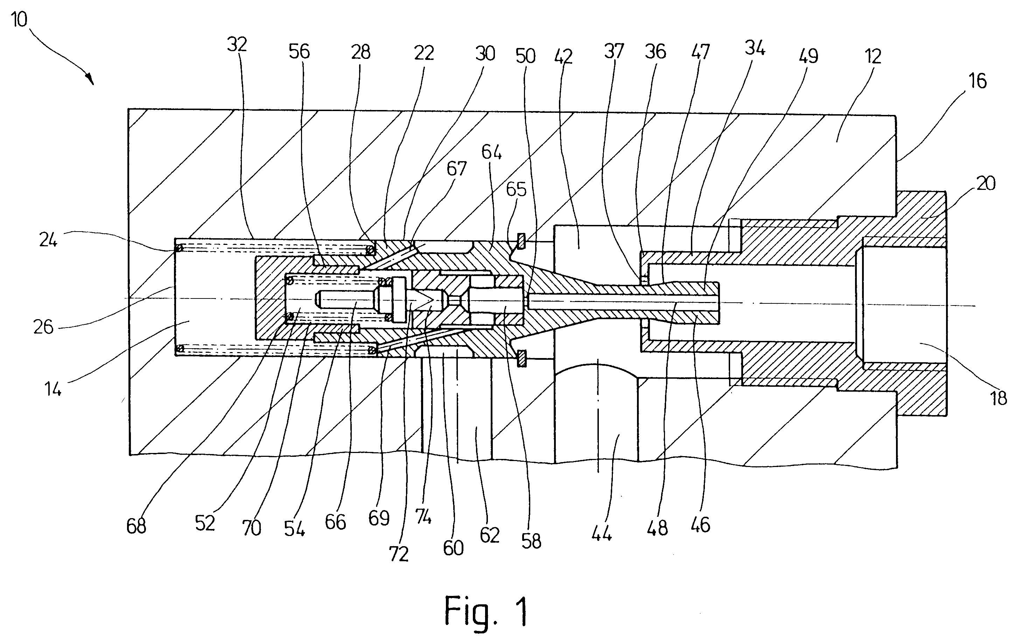

Figur 1 zeigt eine allgemein mit 10 bezeichnete Ventilanordnung, die einen in einem Ventilgehäuse 12 sich axial erstreckenden Innenraum 14 aufweist.

An einer Stirnseite 16 des Ventilgehäuses 12 ist der Innenraum 14 durch einen eine Durchgangsbohrung 18 aufweisenden Stopfen 20 verschlossen. Die Durchgangsbohrung 18 führt dabei zu einem nicht dargestellten Verbraucher, beispielsweise einer Lenkung. Innerhalb des Innenraums 14 ist ein Ventilkolben 22 gegen die Kraft einer Feder 24 axial verschiebbar gelagert. Die Feder 24 stützt sich dabei an einen Grund 26 des Innenraums 14 und einen Bund 28 des Ventilkolbens 22 ab.

Der Ventilkolben 22 besitzt weiterhin Dichtflächen 30, mit denen er an der Wandung 32 des Innenraums 14 dichtend anliegt. Der Stopfen 20 besitzt einen durchmesserkleineren Bereich 34, dessen Stirnseite 36 eine Öffnung 37 aufweist. Die Öffnung 37 stellt eine Verbindung mit einem Ringraum 42 innerhalb des Innenraums 14 her, der mit einer Zuführung 44 einer nicht dargestellten Pumpe in Verbindung steht. Der Ventilkolben 22 weist eine in die Durchgangsbohrung 18 hineinreichende, die Öffnung 37 durchgreifende Verlängerung 46 auf. Die Verlängerung 46 besitzt eine axiale Bohrung 48, die an dem ventilkolbenseitigen Ende der Verlängerung 46 einen durchmesserkleineren Bereich 50 aufweist. Die Verlängerung 46 läuft über eine konische Erweiterung 47 innerhalb der Durchgangsöffnung 18 in einem durchmessergrößeren Bereich 49 aus. Der Durchmesser des Bereiches 49 ist kleiner als der Durchmesser der Öffnung 37. Der Ventilkolben 22 besitzt weiterhin einen sich axial erstreckenden Innenraum 52, in dem ein Druckbegrenzungsventil 54 angeordnet ist. Das Druckbegrenzungsventil 54 besitzt einen Bereich 56, mit dem es in den Innenraum 52 des Ventilkolbens 22 eingepaßt ist.

Das Druckbegrenzungsventil besitzt ein Stützelement 66, das gegen die Kraft einer Feder 68 innerhalb eines Innenraums 70 des Druckbegrenzungsventils 54 axial verschiebbar geführt ist. Das Stützelement 66 drückt einen Schließkörper 72 in eine mit einem Innenraum 58 in Verbindung stehende Öffnung 74 des Druckbegrenzungsventils 54. Der Innenraum 58 steht über die Bohrung 48 mit der Durchgangsbohrung 18 in Verbindung.

Der Ventilkolben 22 besitzt eine einen Ringraum 60 bildende Ausnehmung, der mit einem in dem Ventilgehäuse 12 angeordneten Kanal 62 in Verbindung steht, der zu dem Saugbereich der nicht dargestellten Pumpe führt. Der Ringraum wird durch einen Bereich 64 des Ventilkolbens 22 begrenzt, dessen eine Stirnseite 65 den Ringraum 42 begrenzt. Der Bereich 64 weist eine geringere axiale Länge als der Kanal 62 auf. Von dem Ringkanal 60 führt eine Verbindung 67 zu dem Innenraum 70 des Druckbegrenzungsventils 54. Eine weitere Verbindung 69 verbindet den Innenraum 14 mit dem Innenraum 58.

Die in Figur 1 gezeigte Ventilanordnung 10 übt folgende Funktion aus:

Ein von einer nicht dargestellten Pumpe ausgehender Öldruck wirkt über die Zuführung 44 auf den Ventilkolben 22. Über den Ringkanal 42 und die Öffnung 37 stellt sich gleichzeitig ein bestimmter Ölstrom in der Durchgangsbohrung 18 und damit an einem dort angeschlossenen Verbraucher ein. Dieser Ölstrom wird im wesentlichen durch die freie Durchgangsfläche der Öffnung 37 bestimmt.

In dem Maße, wie der Öldruck in der Zuführung 44 und damit in dem Ringraum 42 ansteigt, wird der Ventilkolben 22 gegen die Kraft der Feder 24 in den Innenraum 14 hineingedrückt. Steigt der Öldruck an, beispielsweise durch eine schnelle Autobahnfahrt, wird der Ventilkolben 22 soweit in den Innenraum 14 gedrückt, daß der Bereich 64 axial über den Kanal 62 verschoben wird, so daß sich eine direkte Verbindung zwischen dem Ringraum 42 und dem Kanal 62 ergibt. Über diese auch Booster genannte Verbindung wird das unter Druck stehende Öl sofort in den Ansaugbereich der Pumpe zurückgeführt. Durch die axiale Verschiebung des Ventilkolbens 22 wird gleichzeitig die Verlängerung 46 in die Öffnung 37 gezogen. Die konische Erweiterung 47 bewirkt dabei eine Verkleinerung der freien Durchgangsfläche der Öffnung 37, so daß trotz eines erhöhten Öldrucks ein reduzierter Ölstrom über die Durchgangsöffnung 18 den angeschlossenen Verbraucher erreicht. Der in der Durchgangsöffnung 18 herrschende Öldruck liegt über die Durchgangsbohrung 48 gleichzeitig in dem Innenraum 58 und damit am Druckbegrenzungsventil 54 und dem Innenraum 14 über die Verbindung 69 an. Durch die Ausbildung des durchmesserkleineren Bereichs 50 der Bohrung 48, die somit als Meßblende wirkt, wird der auf das Druckbegrenzungsventil 54 und im Innenraum 14 wirkende Druck gegenüber dem Druck im Ringraum 42 bei Durchfluß durch die Meßblende reduziert. Wird ein bestimmter maximaler Druck überschritten, wird über die Bohrung 48 in dem Innenraum 58 der Öldruck durch die Öffnung 74 des Druckbegrenzungsventils 54 auf den Schließkörper 72 wirksam, der damit das Stützelement 66 gegen die Kraft der Feder 68 innerhalb des Innenraums 70 axial verschiebt. Hierdurch ergibt sich, daß das unter Druck stehende Öl durch die Öffnung 74 und den Innenraum 70 sowie die Verbindung 67 und den Ringkanal 60 in den Kanal 62 fließen kann. Der Kanal 62 ist mit einem nicht dargestellten Tank und der Ansaugseite der Pumpe verbunden. Der Druck wird damit auf seinen maximalen Wert begrenzt und steigt nicht weiter an. Für die Erfindung wesentlich ist die einfache Schaffung einer Steuerleitung zwischen der Druckseite und der Druckbegrenzungsseite des Stromregelventils, indem dieses durch eine einfache axiale Bohrung 48 geschaffen wird und der Ventilkolben 22 und das Druckbegrenzungsventil 54 die bereits erwähnte spezielle Ausgestaltung besitzen. Die Anordnung der Meßblende 50 bewirkt einen schnellen Druckabbau in dem Innenraum 14 und gewährleistet damit bei einem plötzlichen Mehrbedarf des Verbrauchers ein schnelles Zurückführen des Ventilkolbens 22.

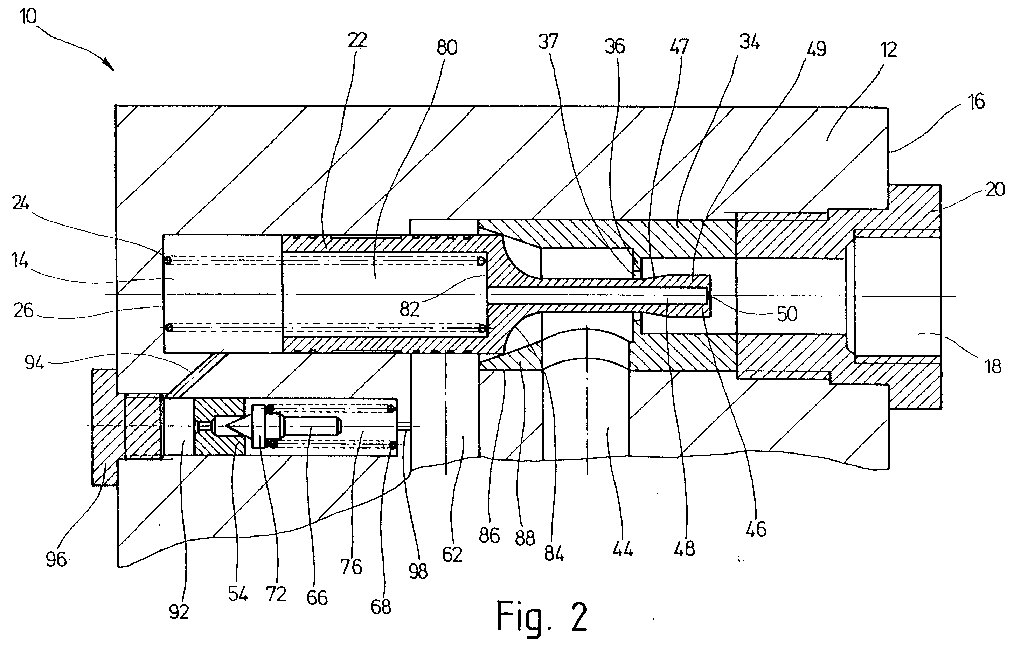

In Figur 2 ist eine Ausführungsvariante einer Ventilanordnung 10 gezeigt, die ein nicht integriertes Druckbegrenzungsventil aufweist. Gleiche Teile wie in Figur 1 sind mit gleichen Bezugszeichen versehen und hier nicht nochmals erläutert.

Der Ventilkolben 22 ist innerhalb des Innenraums 14 des Ventilgehäuses 12 axial beweglich geführt. Der Ventilkolben 22 weist hier einen axialen Innenraum 80 auf, an dessen Grund 82 sich die Feder 24 einerseits und deren anderes Ende sich an dem Grund 26 des Innenraums 14 abstützt. Der Innenraum 80 ist über die axiale Bohrung 48 mit der Durchgangsbohrung 18 des Stopfens 20 verbunden. Der durchmesserkleinere Bereich 50 der axialen Bohrung 48 ist hier an der Seite des Stopfens 20 angeordnet. Das Ventilgehäuse 12 weist einen weiteren axialen Innenraum 92 auf, der durch einen Kanal 94 mit dem Innenraum 14 verbunden ist. Der Innenraum 92 ist durch einen Stopfen 96 verschlossen und nimmt das Druckbegrenzungsventil 54 auf. Der Innenraum 70 des Druckbegrenzungsventils 54 ist über einen Kanal 98 mit dem Kanal 62 verbunden. Der Ventilkolben besitzt eine Stirnfläche 84, die mit einer Ringkante 86 durch die Kraft der Feder 24 gegen ein konisches Wandungsteil 88 des Innenraums 14 gedrückt wird. Die Ringkante 86 dichtet die Zuführung 44 gegen den Kanal 62 im Ausgangszustand des Ventilkolbens 22 ab.

Die in Figur 2 gezeigte Ventilanordnung 10 übt folgende Funktion aus:

Der an der Zuführung 44 von einer nicht dargestellten Pumpe ausgehende Öldruck drückt auf den Ventilkolben 22. Durch den Öldruck wird der Ventilkolben 22 gegen die Kraft der Feder 24 in den Innenraum 14 hineingedrückt, so daß zwischen der Ringkante 86 und dem Wandungsteil 88 eine Boosterverbindung zwischen der Zuführung 44 und dem Kanal 62 frei wird. Wie bereits zu Figur 1 beschrieben, wird über die axiale Verschiebung der Verlängerung 46 ein konstanter Ölstrom in der Durchgangsöffnung 18 ausgeregelt. Selbst wenn die Verlängerung 46 soweit in die Öffnung 37 hineingedrückt wird, daß der Bereich 49 in die Öffnung 37 eingreift, verbleibt eine freie Durchgangsfläche der Öffnung 37. Der Öldruck wird über die axiale Bohrung 48 dem Innenraum 14 bzw. 80 und über den Kanal 94 dem Innenraum 92 zugeführt. Dort bewirkt ein bestimmter maximaler Öldruck ein Öffnen des Schließkörpers 72, indem dieser gegen das Stützelement 66 drückt, so daß die Feder 68 zusammengedrückt wird und eine Verbindung zwischen dem Innenraum 92 und dem Innenraum 70 hergestellt wird. Von dem Innenraum 70 kann das Öl über den Kanal 98 in den Kanal 62 und damit zurück in einen nicht dargestellten Tank abfließen.

## Patentansprüche

1. Ventilanordnung (10) für eine Pumpe mit einem Stromregelventil, das einen in einer Ventilbohrung gegen die Kraft einer Feder (24) axial verschiebbar und dichtend geführten Ventilkolben (22) aufweist, mit einer Öffnung (37) zur Druckseite hin, mit einer die verbraucherseitige Druckseite des Stromregelventils mit einer Druckbegrenzungsseite des Stromregelventils verbindenden Steuerleitung und einem in der Druckbegrenzungsseite angeordneten Druckbegrenzungsventil (54), wobei der Ventilkolben (22) bei hohem pumpseitigen Druck eine Verbindung zur Ansaugseite der Pumpe freigibt, **dadurch gekennzeichnet**, daß die Steuerleitung durch den Ventilkolben (22) geführt ist, und daß der Ventilkolben (22) eine in die Druckseite reichende, vorzugsweise zylindrische, Verlängerung (46) aufweist, innerhalb derer eine die Steuerleitung bildende axiale Bohrung (48) angeordnet ist, die mit wenigstens einem in die Druckbegrenzungsseite des Ventilkolbens (22) mündenden Kanal in Verbindung steht.

2. Ventilanordnung nach einem der vorhergehenden Ansprüche, **dadurch gekennzeichnet**, daß die axiale Bohrung (48) über einen durchmesssrkleineren Bereich (50) an der Druckseite des Ventilkolbens (22) mündet.

3. Ventilanordnung nach einem der vorhergehenden Ansprüche, **dadurch gekennzeichnet**, daß der Kanal durch einen Innenraum (58) des Ventilkolbens (22) und einer Verbindung (69) gebildet wird.

4. Ventilanordnung nach einem der vorhergehenden Ansprüche, **dadurch gekennzeichnet**, daß der Innenraum (58) mit dem Druckbegrenzungsventil (54) in Verbindung steht.

5. Ventilanordnung nach einem der vorhergehenden Ansprüche, **dadurch gekennzeichnet**, daß die axiale Bohrung (48) direkt in einen den Ventilkolben (22) aufnehmenden Innenraum (14) mündet.

6. Ventilanordnung nach einem der vorhergehenden Ansprüche, **dadurch gekennzeichnet**, daß der durchmesserkleinere Bereich (50) wahlweise an der Druckseite oder der Druckbegrenzungsseite des Stromregelventils angeordnet ist.

## Claims

1. A valve arrangement (10) for a pump, having a flow control valve with a valve piston (22) which is axially displaceable and sealingly guided in a valve bore against the force of a spring (24), having an opening (37) to the pressure side, having a control line connecting the pressure side, located closest to the consumer, of the flow control valve to a pressure relieving side of the flow control valve, and having a pressure relief valve (54) arranged in the pressure relieving side, the valve piston (22) opening a connection to the suction side of the pump when the pump pressure is high, characterised in that the control line passes through the valve piston (22), and in that the valve piston (22) has an extension piece (46) which is preferably cylindrical and which reaches into the pressure side, an axial bore (48) forming the control line being arranged within this extension piece (46) and being connected to at least one channel opening into the pressure relieving side of the valve piston (22).

2. A valve arrangement in accordance with Claim 1, characterised in that the axial bore (48) ends at the pressure side of the valve piston (22) via a region (50) of relatively small diameter.

3. A valve arrangement in accordance with any one of the preceding Claims, characterised in that the channel is formed by an interior space (58) of the valve piston (22) and a connection (69).

4. A valve arrangement in accordance with any one of the preceding Claims, characterised in that the interior space (58) is connected to the pressure relief valve (54).

5. A valve arrangement in accordance with any one of the preceding Claims, characterised in that the axial bore (48) opens directly into an interior space (14) receiving the valve piston (22).

6. A valve arrangement in accordance with any one of the preceding Claims, characterised in that the region (50) of relatively small diameter is arranged at the pressure side or alternatively at the pressure relieving side of the flow control valve.

## Revendications

1. Ensemble de soupape (10) pour une pompe, avec une soupape de réglage de débit qui présente un piston de soupape (22) guidé en étanchéité et à coulissement axial contre la force d'un ressort (24) dans un alésage de soupape, avec une ouverture (37) vers le côté de refoulement, avec une conduite de commande reliant le côté de refoulement vers l'utilisateur de la soupape de réglage de débit à un côté de limitation de pression de la soupape de réglage de débit, et avec une soupape de limitation de pression (54) disposée dans le côté de limitation de pression, le piston de soupape (22) libérant, en cas de forte pression du côté de la pompe, une liaison vers le côté d'aspiration de la pompe, **caractérisé** en ce que la conduite de commande est dirigée à travers le piston de soupape (22), et en ce que le piston de soupape (22) présente un prolongement (46), de préférence cylindrique, s'étendant dans le côté de refoulement et à l'intérieur duquel est disposé un alésage axial (48) constituant la conduite de commande, alésage qui est relié à au moins un canal débouchant dans le côté de limitation de pression du piston de soupape (22).

2. Ensemble de soupape selon revendication 1, **caractérisé** en ce que l'alésage axial (48) débouche sur le côté de refoulement du piston de soupape (22) par l'intermédiaire d'une région (50) de diamètre inférieur.

3. Ensemble de soupape selon une des revendications précédentes, **caractérisé** en ce que le canal est formé par un espace intérieur (58) du piston de soupape (22) et une liaison (69).

4. Ensemble de soupape selon une des revendications précédentes, **caractérisé** en ce que l'espace intérieur (58) est relié à la soupape de limitation de pression (54).

5. Ensemble de soupape selon une des revendications précédentes, **caractérisé** en ce que l'alésage axial (48) débouche directement dans un espace intérieur (14) recevant le piston de soupape (22).

6. Ensemble de soupape selon une des revendications précédentes, **caractérisé** en ce que la région (50) de diamètre inférieur est disposée, au choix, sur le côté de refoulement ou sur le côté de limitation de pression de la soupape de réglage de débit.
